# EUROPEAN PATENT APPLICATION

(11) **EP 2 921 791 A1**
(43) Date of publication of application: **23.09.2015**
(21) Application number: 13843884.1
(22) Date of filing: 27.09.2013
(51) Int. Cl.: F24D 17/00

(54) **SYSTEM FOR RECIRCULATING WATER BETWEEN COLD WATER AND HOT WATER PIPES**

(30) Priority: 02.10.2012 MX 2012011441
(71) Applicant: Salazar Ugarte, Hugo Iván, 76905 Corregidora, Querétaro (MX)
(72) Inventor: Salazar Ugarte, Hugo Iván, 76905 Corregidora, Querétaro (MX)
(74) Representative: Alier Benages, Elisabet
(86) International application number: PCT/MX2013/000115
(87) International publication number: WO 2014/054934

(57) **Abstract**

The present invention relates to a system intended to avoid wastage of the cold water that is allowed to flow while waiting for the hot water to arrive from the heater to the showers, wherein the system is comprising three essential structural components which are an extension element, a division nut, a complementary recirculation chamber that in combination with a connecting means, obtain novel results.

## Description

### FIELD OF INVENTION

The present invention relates to a water saving system for recirculation of water between hot and cold water piping, intended to avoid the waste of the water that we allow to flow while waiting for the hot water to arrive the mixer valves and faucets. This system is used anywhere where hot water is supplied through faucets.

### BACKGROUND OF THE INVENTION

Nowadays valves and water mixer systems (eg. for shower) are built to allow mixing of cold water with hot water once the hot water has arrived from the heater to the shower. The problem is that the cold water that is stored in the pipe between the heater and the shower for example, is allowed to flow until the hot water reaches the mixer valve and therefore the shower.

The options that have been proposed until now to recycle water or use it in other sanitary facilities require to perform installation jobs that imply modifications in the construction or to integrate storage tanks and equipment that limit the possibility of most households and businesses to consider alternative for the sole purpose of saving water.

In the same way, available recirculation alternatives that do not require to perform installation in the construction, consider incorporating a deviation system or "bypass" in the sink's hoses that is farthest from the heater, using a recirculation pump which is activated wirelessly and that makes the hot water to arrive to the sink that has the deviation system or "bypass", however, this model has several drawbacks such as the fact that hot water reaches the last bathroom even when you go to use the one that is closest to the heater and the hot water goes through the central pipe but doesn't reach directly to the shower being used so that the cold water that is remaining between the central pipe and the shower, is still wasted.

In the case of new constructions, implementing a recirculation system involves installing additional pipe with which reconnects each shower with the central water line the same as valves that are used to redirect the cold water as long as the hot water reaches each shower. This, besides to complicate the system with deviation devices also increases the cost of the facility for including an extraordinary amount of pipe thereby limiting developers to consider the option.

### OBJECTIVES OF THE INVENTION

Therefore, and in order to solve the problems that currently presents, it is an objective of the present invention to provide an economical, functional alternative that does not require any special installation and allows to save the cold water that is wasted while waiting the hot water to come from the heater to the shower.

It is another object of the present invention to provide a recirculation system which connects the valve of a faucet chamber in order to recirculate cold water directly from showers without the need to change the mixer valves and with the possibility of using the original faucets.

Another objective of the present invention is to provide an extension element, a division nut, and a complementary recirculation chamber for each of the faucets of the mixer valve, creating with this a flow detour in the installed mixer valve of which, each of the faucets has a mixing chamber and a rod with a rod lock.

Another object of the present invention is to provide an accessory kit (kit) to create a water saving system that may be used by a user.

A further object of the present invention is to provide a method of assembling a water saving system on installed mixer valves, using the same facilities and the characteristic elements of the original faucets, of the type that has a mixing chamber and a rod with rod lock.

### DESCRIPTION OF THE INVENTION

### BRIEF DESCRIPTION OF THE FIGURES

Figure 1 is a cross-sectional view of an arrangement of a faucet with an extension element (1), a division nut (2), and a complementary recirculation chamber (CCR), which illustrates that the second chamber (CCR) receives the nut thread and he division nut engages in the mixing chamber (CM).
Figure 2 is an exploded perspective view including a rod and an extension element.

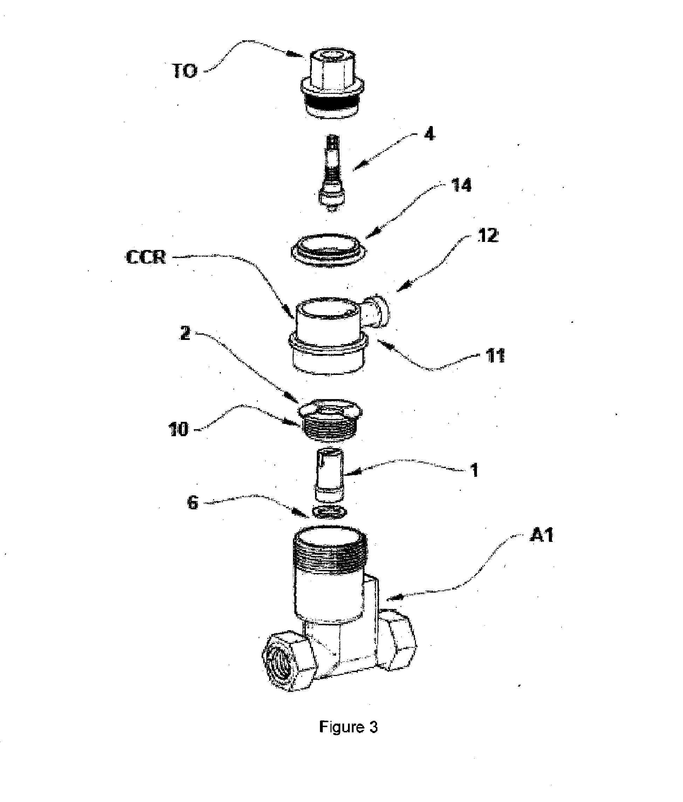

Figure 3 is an exploded perspective view of a faucet as illustrated in Figure 1.
Figure 4 is a view of a modality of the present invention system with control valve.

### DETAILED DESCRIPTION OF THE INVENTION

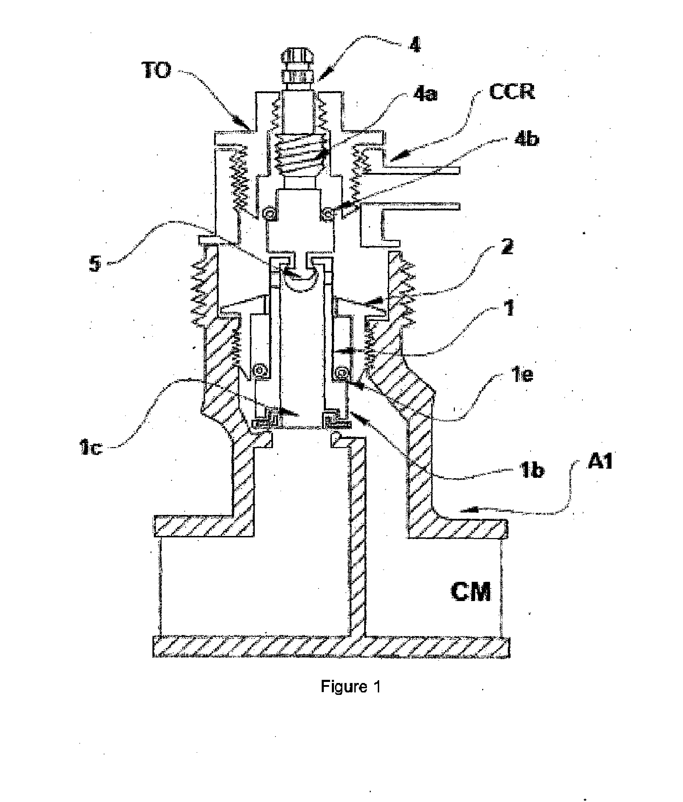

As illustrated in Figures 1, the present invention refers a system comprising an extension element (1), a division nut (2), and a complementary recirculation chamber (CCR) to create a bypass flow in an installed mixer valve of those with a mixing chamber (CM) and a rod (4) with a rod lock (5) (in some cases this lock can be a screw or other design).

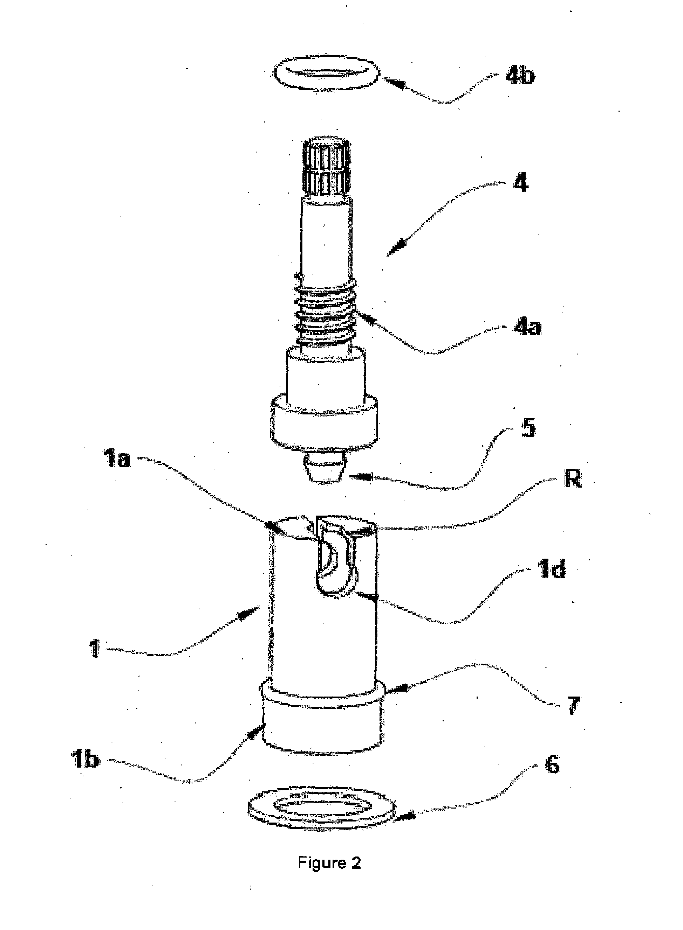

Supported in Figures 1 and 2, such extension element (1) comprises a hollow elongated body having an upper end (1a) and a lower end (1 b), such lower end (1b) forms an inlet (1 c) making a closing edge, wherein such inlet (1c) has a gasket (6) of rubber for closing the passage of water to the mixing chamber (MC) or first chamber, which means the division nut (2) sealingly adjusts the rod so that prevents water from going back and pass to the shower, but allows the flow to the second chamber.

The extension element (1) comprises means (R) for coupling arranged on the upper end (1 a) of the elongated body so the lock of the rod (5) engages the extension element, the means (R) for coupling consist on a slot or special hole, in the described and illustrated modality the mention is made of a special slot traversing the cross section of the extension element, wherein such special slot is specially designed to receive the lock (5) of the rod from which has been previously removed the original packaging, and wherein the rod is locked to perform its intended displacement task for closing and opening via the thread (4a) placed at the top and which in turn ties to the internal thread that the original nut has (TO) which for that effect engages to the complementary recirculation chamber (CCR). As already indicated, in another modality, the slot may just be a hole or a different design and change its arrangement according to the characteristics of the rod lock.

The extension element also comprises means (1d) of water exit arranged in the elongated body substantially close to the upper end (1 a) of the hollow elongated body of the extension (1), so that such means (1d) of water exit must overcome the top of the division nut (2) when the faucet is closed. The means (1d) of water exit consist of two co-linear perforations arranged orthogonally relative to the longitudinal axis of the extension element (1) such water outlets allow flow thereof towards the complementary recirculation chamber (CCR), and wherein the slot (R) communicates with the two holes. As already indicated, for purposes of a better description reference is been made to the modality illustrated, however, the characteristics of the means (1d) of water exit may vary.

The extension element (1) that creates a flow deviation in a mixer valve also has at its elongated hollow body a step (1e) that produces a discontinuity of diameters in the total length of the hollow elongated body, the step (1 e) is adapted to receive a gasket ring (7) which ties with the inner circumference of the division nut (2) and prevents leakage of returning water to the mixing chamber (MC) from the complementary recirculation chamber (RCC).

This extension element (1) is part of a complementary system to the existing faucets and water mixing systems, in its enitrety the system object of the present invention integrates three parts that are: an extension element (1), a division nut (2), and an additional recirculation chamber (CCR), these three parts can be produced with the same infrastructure of existing parts are produced without the need for extra investment in equipment and with a simple configuration of the production line. The same way, the extension element (1) can be machined in the same material in which the rods are currently produced or can be made of injected or machined plastic material since by the disposition in which the rod (4) is mounted in the original mixer valve, the pressure needed for the new device to perform its function of closing the flow into the shower, applies directionally without duplicating the rotary movement of the faucet.

The division nut (2) can be manufactured in the same way as the original nut eliminating the body that couples to the tool for installation *l* removal, and eliminating the inner thread used for the original rod (4) to perform the action of opening or closing flow due to the displacement that occurs when rotated, this division nut (2) comprises an outer thread (10) which is compatible with the inner thread of the mixer valve body. The function of the division nut (2) is essential for water to flow towards the complementary recirculation chamber (CCR) so the proper functioning of the system is performed; the division nut (2) has, at its top, a series of notches so the tighten might be made by a tool.

The complementary recirculation chamber (CCR), the same as the above mentioned elements, can be produced with the same material and process with which the body of the mixer is made or, the same way can be done with injected plastic material to the extent n that its function does not imply mechanical stresses that compromise its structure and function. This additional recirculation chamber (CCR), has in its top an inner thread which is compatible with the outer thread of the original nut (TO) which are hermetically coupled together by such threads and the inclusion of a gasket (14).

Also, this additional recirculation chamber (CCR) comprises a bypass (12) to communicate with the other faucet or mixier valve. The complementary recirculation chamber (CCR) threadably engages the outer thread of the faucet or mixer valve (A1, B1), such coupling is effected by means of a cylindrical sleeve (11) including an internal thread, said cylindrical sleeve (11) adapts to the outside of the bottom of the complementary recirculation chamber (CCR).

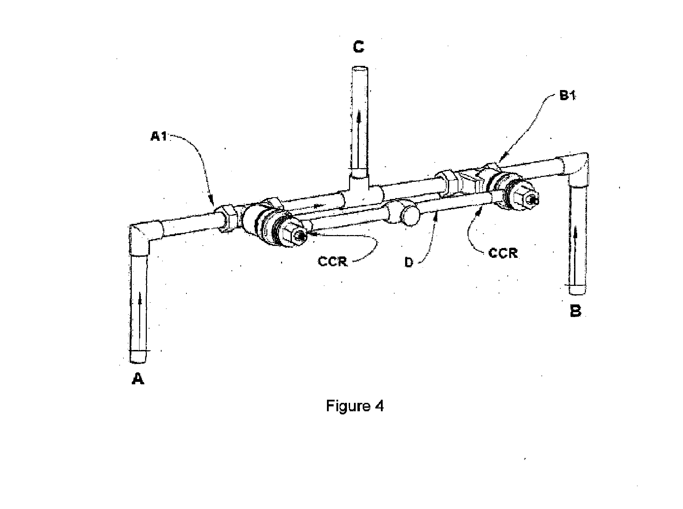

One modality of the system is best illustrated in Figure 4, wherein such water-saving system is obtained by means of the extension element (1) and the structural combination of the division nut (2) and the complementary recirculation chamber (CCR).

With support in figure 1, we usually have a water mixer, comprising a faucet or mixer valve (A1) and a faucet (B1), where the faucet (A1) controls the flow of cold water from a cold water circuit (A), the same, the faucet (B1) controls the flow of hot water from a hot water circuit (B), so that a certain temperature is obtained at the outlet of the water supply (C) that goes toward the user. In these systems where the system, object of the present invention, will engage in order to incorporate to the faucet or mixer valve (A1) and the faucet or mixer valve (B1), the extension element (1) the division nut (2) and the complementary recirculation chamber (CCR) to create a flow deviation in the mixer, such flow deviation is accomplished through a "by-pass" or connection means (D) consisting of a form of a tube which fluidly communicates the complementary recirculation chambers (CCR) of each of the mixier valves (A1, B1) wherein the fluid passing through such tube is controlled by a bypass valve which when opened, allows flow of water from the hot water pipe to the cold water circuit (A) to perform a recirculation of water until the hot water reaches the faucet, thus avoiding wastage of water. The bypass valve can be operated manually, automatically or semi-automatically, depending on the specific design of the model.

Flow deviation of the system, object of the present invention, which is carried out through the connecting means (D) is controlled by a pump (not shown) that replaces the control valve, wherein the pump is activated automatically in order to send the water from the hot water circuit (B) to the cold water circuit (A). The placement of the pump may be at any point of the plumbing installation in order to send the water from the hot pipe to the cold water, i.e., it can be installed in the hot water outlet of the heater or at the entrance of cold water heater and operated remotely from the shower.

Although not illustrated in detail, the present invention also relates to an accessory kit (kit) to create a water saving system, where the kit comprises:
- At least one extension element (1) to create a flow bypass between the faucets of the mixer valve;
- At least one division nut (2);
- At least one complementary recirculation chamber (CCR);
- At least one connecting means (D).

This kit or accessory kit can be integrated into a special box or bag or any other form of packaging, transportation and presentation, so that the end user can make use of it and carry out the connection of the system on mixing faucet that are already installed.

As already mentioned, the present invention also provides a novel and inventive method of assembling a water saving system already on installed mixer valves which have a mixing chamber (MC) and a rod (4) with a rod lock (5).

It is noteworthy that the method applies to each of the mixing faucets, both the cold water circuit and the hot water circuit. For a better understanding of this method, its steps are described as follow:
a) Provide an equipment or accessory kit with:
   - An extension element (1) to create a flow bypass at the valve.
   - A division nut (2);
   - A complementary recirculation chamber (CCR);
   - Connecting means (D)
b) Disassembling the installed mixer valve, this applies to each of the mixer valves or faucets (A1, B1) of the circuit.
c) Remove the rod (4) and remove the gasket attached to the rod lock (5) so that the lock (5) of the rod becomes liberated;
d) Coupling the rod (4) to the extension element (1) through the lock (5) of the rod and the coupling means (R) arranged on the upper end (1a) of the elongated body of the extension member;
e) Attach the complementary recirculation chambers (CCR) to each of the two mixer valves or faucets (A1, B1);
f) Attach the chambers (CCR) to each of the two mixer valves or faucets (A1, B1) via connecting means (D) which have a control valve.

This mounting method for the saving water system includes an important step which is to provide a water pump that takes water from the hot water circuit and pumps it through the cold water circuit. The arrangement of the pump can be at any point in the circuit, i.e., can be installed at the outlet of the hot water heater or the cold water inlet of the heater and be operated remotely from the shower.

## Claims

1. A water-saving system to create a bypass flow in the already installed mixers having a mixing chamber (MC) and a rod (4) with a rod lock (5), the system comprising;
a) a cold water circuit (A) which is fluidly connected to a mixing faucet (A1);
b) A hot water circuit (B) which is fluidly connected to a mixing faucet (B1);
c) an extension element (1) to create a flow bypass from the mixer into a second chamber, comprising an elongate hollow body with an upper end (1 a), wherein the upper end (1 a) is coupled to the rod lock (5);
d) a division nut (2) which slidably engages to the extension element (1), comprising such division nut (2) an outer thread (10) which is compatible with an inner thread from the faucet body (A1, B1);
e) a complementary recirculation chamber (CCR) having means for engaging an external thread of the mixing faucet (A1, B1) and maintain in position the rod (4) and the extension element (1);
f) connecting means (D) between the complementary recirculation chamber of the mixing faucet (B1) of the hot water circuit (B) and complementary recirculation chamber of the mixing faucet (A1) of the cold water circuit (A)

2. A water saving system according to claim 1, **characterized in that** the extension element (1) has a lower end (1 b), said lower end (1 b) forms an inlet (1c), wherein said input opening (1c) has a gasket (6) for closing the passage of water to the mixing chamber (CM).

3. A water saving system according to claim 1, **characterized in that** the extension element (1) comprises means (R) for coupling arranged on the upper end (1a) of the elongated body so that the rod lock (5) may be coupled thereto; and means (1 d) of water exit arranged in the elongated body substantially close to the upper end (1 a) of the hollow elongated body of the extension element (1).

4. A water saving system in accordance with claim 1 **characterized in that** the elongated hollow body of the extension element (1) comprises a step (1e) that produces a discontinuity in diameters in the total length of the hollow elongated body, wherein that step (1 e) is adapted to receive a ring type gasket (7).

5. A water saving system according to claim 1, **characterized in that** the connecting means between the complementary recirculation chambers (CCR) comprises a control valve.

6. A water saving system according to claim 1, **characterized in that** included in any part of the circuit, there is a pump that takes water from the hot water circuit and pumps it through the cold water circuit.

7. A water saving system according to 1, **characterized in that** the division nut (2) has an external thread matching the internal thread of the faucet (A1, B1).

8. A water saving system according to claim 1, **characterized in that** the means for coupling the complementary recirculation chamber (CCR) to an external thread of the faucet or mixer valve (A1, B1) and maintain in position the rod (4) and the extension element (1), comprising a cylindrical sleeve (11) internally threaded.

9. A kit to create a water saving system that generates a flow diversion in installed mixer valves of which have a mixing chamber (MC) and a stem (4) with a rod lock (5), the kit comprising:
a) At least one extension element (1) to create a diversion of flow in each faucet of a mixer valve;
b) At least one division nut (2);
c) At least one complementary recirculation chamber (CCR);
d) At least one connecting means (D)

10. A method of assembling a water saving system on already installed mixer valves which have a mixing chamber (MC) and a rod (4) with a rod lock (5), comprising the steps of:
a) providing a kit containing:
- two extension elements (1) to create a diversion of flow between the faucets of the mixer valve;
- two division nuts (2);
- two complementary recirculation chambers (CCR);
- connecting means (D);
b) disassembling each installed mixer valve's faucet;
c) removing each rod (4) and remove the gasket attached to the rod lock (5) so that the rod lock (5) is liberated;
d) Coupling each rod (4) to each of the extension elements (1) through the rod lock (5) and means (R) arranged on the upper end (1a) of the elongated body of the extension element;
e) securing each rod with each division nut (2), which comprises an outer thread (10) that is compatible with the inner thread of the mixer valve body;
f) coupling complementary recirculation chambers (CCR), wherein each of the complementary recirculation chambers (CCR) has means for engaging an external thread of the faucet or mixer valve (A1, B1) and maintain in position the rod (4) and the extension element (1);
g) coupling the connecting means (D) between the complementary recirculation chamber of the faucet (B1) of the hot water circuit (B) and complementary recirculation chamber of the faucet (A1) of the cold water circuit (A).

11. A method of assembling a water saving system on the already installed mixer valves, which have a mixing chamber (MC) and a rod (4) with a rod lock (5) according to claim 10, **characterized in that** the connection means (D) has a valve positioned in the pipe of the connection means (D).

12. A method of assembling a water saving system on the already installed mixer valves, which have a mixing chamber (MC) and a rod (4) with a rod lock (5) according to claim 10, **characterized in that** includes the step of providing a pump that takes water from the hot water circuit and pumps it through the cold water circuit.
